# EUROPEAN PATENT SPECIFICATION

(11) **EP 2 957 332 B1**
(45) Date of publication and mention of the grant of the patent: **05.12.2018**
(21) Application number: 13871448.0
(22) Date of filing: 10.12.2013
(51) Int. Cl.: B01D 21/30, B01D 21/01, B01D 21/06, B01D 21/08, B01D 21/24, C22B 3/04, C22B 23/00, C22B 3/08, C22B 3/00

(54) **SOLID-LIQUID-SEPARATION PROCESSING METHOD, AND HYDROMETALLURGICAL METHOD FOR NICKEL OXIDE ORE**
FESTSTOFF-FLÜSSIGKEITS-TRENNVERFAHREN UND HYDROMETALLURGISCHES VERFAHREN FÜR NICKELOXIDERZ
PROCÉDÉ DE TRAITEMENT DE SÉPARATION SOLIDE-LIQUIDE, ET PROCÉDÉ HYDROMÉTALLURGIQUE POUR MINERAI D'OXYDE DE NICKEL

(30) Priority: 21.01.2013 JP 2013008659
(43) Date of publication of application: 23.12.2015
(73) Proprietor: Sumitomo Metal Mining Co., Ltd., Tokyo 105-8716 (JP)
(72) Inventor: MITSUI, Hiroyuki, Tokyo 105-8716 (JP); NAKAI, Osamu, Tokyo 105-8716 (JP); KYODA, Yoji, Tokyo 105-8716 (JP)
(74) Representative: Müller-Boré & Partner Patentanwälte PartG mbB
(86) International application number: PCT/JP2013/083090
(87) International publication number: WO 2014/112248

(56) References cited:
- JP-A- H05 229 816
- JP-A- H11 221 575
- JP-A- 2001 239 272
- JP-A- 2001 286 875
- JP-A- 2005 350 766
- JP-A- 2012 148 265
- US-A- 4 110 401
- US-A- 6 090 293
- US-A1- 2013 008 856

## Description

### Field of the Invention

The present invention relates to a solid-liquid-separation processing method, and a hydrometallurgical method for nickel oxide ore.

### Background Art

In recent years, high pressure acid leach using sulfuric acid has been attracting attention as a hydrometallurgical method for nickel oxide ore. This high pressure acid leach does not include pyrometallurgical processing steps, such as a drying step and a roasting step, but includes consistent hydrometallurgical steps, and thus is advantageous in terms of energy and cost, and in addition, high pressure acid leach has another advantage that a nickel-cobalt mixed sulfide whose nickel grade is improved up to approximately 50% by weight can be obtained.

Specifically, a hydrometallurgical method for nickel oxide ore by making use of high pressure acid leach to obtain a nickel-cobalt mixed sulfide includes the following steps, for example. That is, the hydrometallurgical method includes the steps of :(1) applying high temperature and pressure acid leaching to a nickel oxide ore to obtain a leach slurry; (2) applying solid-liquid separation to the leach slurry to obtain a crude nickel sulfate solution (leachate) which contains zinc as an impurity element besides nickel and cobalt; (3) introducing the crude nickel sulfate solution into a sulfurization reaction tank and adding a sulfurizing agent such as hydrogen sulfide gas thereto to sulfurize zinc contained in the crude nickel sulfate solution, and performing solid-liquid separation to obtain a zinc sulfide and a post-dezincification solution; and (4) introducing the post-dezincification solution into a sulfurization reaction tank and adding a sulfurizing agent such as hydrogen sulfide gas thereto to sulfurize nickel and cobalt contained in the post-dezincification solution, and performing solid-liquid separation to obtain a nickel-cobalt mixed sulfide and liquid waste resulting from refining (barren liquor).

In this hydrometallurgical method, in the solid-liquid separation process in the step (2), usually, a leach slurry obtained by the step (1) is separated into a crude nickel sulfate solution and a leach residue by a thickening apparatus, and, at the same time, multistage washing is applied to the leach slurry. Specifically, as a multistage washing method, there is employed a counter current decantation method (CCD method) which is performed in such a manner that thickening apparatuses are connected in multiple stages and the leach slurry is brought into countercurrent contact with a washing liquid containing no valuable metal to wash away free water of a residue, whereby the recovery percentage of valuable metals is improved. Although various methods are known as a method for washing the residue, this CCD method makes it possible to cut down a washing liquid newly introduced in a system and moreover to achieve the recovery percentage of nickel and cobalt of not less than 95% (for example, refer to Patent Documents 1 to 3).

Meanwhile, it has been known that the recovery percentage of nickel and cobalt recovered from a crude nickel sulfate solution (leachate) is correlated with the turbidity of the leachate. Hence, in practical operations, the recovery percentage of nickel and cobalt is controlled by the turbidity of an obtained crude nickel sulfate solution. Specifically, that turbidity value is not more than 200 NTU, which is a value measured by a turbidity meter (for example, 2100P-type scattered light turbidity meter, manufactured by HACH Company). That is, a higher clarity (a lower turbidity) of a crude nickel sulfate solution indicates that the flocculation of solids has progressed and free water has been sufficiently washed away, and thus there is a good correlation between the recovery percentage and the turbidity.

In multistage washing using a CCD method, when the number of the stages (the number of connected thickening-apparatus stages) is larger, flocculation of solids and washing of free water proceeds, and accordingly, the crude nickel sulfate solution has a higher clarity, and the recovery percentage of valuable metals is improved. However, there are limits on installation space and on initial investment, and therefore, the number of the stages cannot be increased without limitation. Conversely, it has been desired that, even with a smaller number of the stages, the same recovery percentage as in conventional methods is achieved.

Conventionally, for example, in the operations according to Patent Documents 1 to 3, in order to achieve the recovery percentage of nickel and cobalt of not less than 95% (a turbidity of not more than 200 NTU), multistage washing using at least five stages is needed, and, commonly, multistage washing using six to seven stages has been carried out. Patent document 4 discloses a method for controlling solids/liquid decant unit operations and systems and patent document 5 discloses a process for reducing the quantity of water contained in pulps of nickel-bearing oxide ores.

### Prior-Art Documents

### Patent Documents

Patent document 1: Japanese Patent Application Laid-Open No. 2005-350766
Patent document 2: Japanese Patent Application Laid-Open No. 2011-225908
Patent document 3: Japanese Patent Application Laid-Open No. 2011-225956
Patent document 4: US Patent Application US US 2013/008856 A
Patent document 5: US Patent Application US 6 090 293 A

### Summary of the Invention

### Problems to be Solved by the Invention

The present invention is proposed in view of such actual circumstances, and an object of the present invention is to provide a solid-liquid-separation processing method in which, by using an apparatus equipped with thickening apparatuses connected in multiple stages, multistage washing is applied to a slurry to separate and remove solids in the slurry, in which, even in the case where the number of connected thickening-apparatus stages is smaller, the slurry can be effectively washed and the clarity of supernatant liquid obtained by the processing can be improved, and to provide a hydrometallurgical method for nickel oxide ore which adopts the solid-liquid-separation processing method.

### Means to Solve the Problems

The present inventors earnestly studied to achieve the above-mentioned object. As a result, the inventors found that, when multistage washing is carried out using thickening apparatuses connected in multiple stages to perform solid-liquid separation processing, part of a flocculant to flocculate solids in a slurry is added to a feed well of a first-stage thickening apparatus, and moreover, part of the flocculant is added to an overflow unit of a second-stage thickening apparatus, whereby the clarity of an obtained supernatant liquid is made higher.

That is, the solid-liquid-separation processing method according to the present invention is such that thickening apparatuses each equipped with an agitation tank and a sedimentation tank having an overflow unit in a peripheral portion thereof to discharge supernatant liquid and a cylindrical feed well vertically arranged at a central portion thereof are provided in multiple stages, and multistage washing is applied to a slurry to separate solids in the slurry and obtain a solution from which the solids are removed, in which, at the time of adding a flocculant configured to flocculate the solids in the slurry, a predetermined proportion of the flocculant is added to a feed well in a first-stage thickening apparatus, and the remainder of the flocculant is added to an overflow unit in a second-stage thickening apparatus.

Here, in the foregoing solid-liquid-separation processing method, a proportion of the amount of the flocculant added to the first-stage thickening apparatus to the amount of the flocculant added to the second-stage thickening apparatus is preferably from 95:5 to 50:50.

Furthermore, in the foregoing solid-liquid-separation processing method, as the slurry, there can be employed a leach slurry which is obtained by applying leaching processing to a nickel oxide ore in a hydrometallurgical method for the nickel oxide ore, and a leach residue in the leach slurry is separated therefrom to obtain a leachate which contains an impurity element together with nickel and cobalt.

Furthermore, a hydrometallurgical method for nickel oxide ore according to the present invention is such that nickel and cobalt are recovered from a leachate obtained by adding sulfuric acid to a nickel oxide ore and performing leaching under high temperature and high pressure, in which the method includes a solid-liquid separation step in which, at the time of solid-liquid separation processing being such that thickening apparatuses each equipped with an agitation tank and a sedimentation tank having an overflow unit in a peripheral portion thereof to discharge supernatant liquid and a cylindrical feed well vertically arranged at a central portion thereof are provided in multiple stages, and multistage washing is applied to a leach slurry obtained by applying leaching to the nickel oxide ore to separate a leach residue in the leach slurry therefrom, a predetermined proportion of a flocculant is added to a feed well in a first-stage thickening apparatus and the remainder of the flocculant is added to an overflow unit in a second-stage thickening apparatus, and multistage washing is applied to the leach slurry to perform solid-liquid separation processing.

### Effects of the Invention

According to the present invention, even in the case where the number of stages of thickening apparatuses used for multistage washing is smaller, a solution (supernatant liquid) having a higher clarity can be attained. This allows an installation space for a solid-liquid separation apparatus to be reduced and initial capital investment to be substantially reduced, and accordingly efficient solid-liquid separation processing can be achieved.

Furthermore, the application of this solid-liquid-separation processing method to a hydrometallurgical method for nickel oxide ore enables the achievement of a leachate which makes it possible to recover nickel and cobalt at a high recovery percentage even in the case where multistage washing is performed with a smaller number of thickening-apparatus stages than in the conventional methods.

### Brief Description of the Drawings

Fig. 1 is a flowchart of a hydrometallurgical method for nickel oxide ore.
Fig. 2 illustrates a configuration of a processing apparatus to perform a CCD method with thickening apparatuses connected in multiple stages.
Fig. 3 illustrates a configuration of a thickening apparatus (one stage only).

### Detailed Description of the Invention

Hereinafter, a specific embodiment of a solid-liquid-separation processing method and a hydrometallurgical method for nickel oxide ore which adopts the solid-liquid-separation processing method according to the present invention will be described in details in the following order with reference to the drawings. It should be noted that the present invention is not limited to the following embodiment, and various changes can be made within the scope not deviating from the gist of the present invention.
1. Outline of solid-liquid-separation processing method
2. Hydrometallurgical method for nickel oxide ore
3. Solid-liquid separation step in hydrometallurgical method 3-1. Configuration of thickening apparatus and multistage washing 3-2. Specific operation of solid-liquid separation processing
4. Examples

### «1. Outline of solid-liquid-separation processing method»

A solid-liquid-separation processing method according to the present embodiment is such that solids, such as a precipitate, contained in a slurry are separated from the slurry to obtain a solution constituting supernatant liquid from which solids are removed. More specifically, the solid-liquid-separation processing method is such that, as a solid-liquid separation apparatus, there is employed a thickening apparatus equipped with an agitation tank and a sedimentation tank having an overflow unit in a peripheral portion thereof to discharge supernatant liquid and a cylindrical feed well vertically arranged at a central portion thereof, and the thickening apparatuses are provided in multiple stages, whereby multistage washing is applied to the slurry which is subject to processing to separate and remove the solids therefrom.

Specifically, in this solid-liquid-separation processing method, at the time when a flocculant to flocculate the solids in the slurry is added, a predetermined proportion of a predetermined amount of the flocculant is added to a feed well in a first-stage thickening apparatus and the remainder of the flocculant is added to an overflow unit in a second-stage thickening apparatus.

As mentioned above, the solid-liquid-separation processing method according to the present embodiment is characterized by an addition method for a flocculant added at the time of solid-liquid separation. According to the solid-liquid-separation processing method, even in the case where the number of stages of thickening apparatuses used for multistage washing is smaller, a solution (supernatant liquid) having a higher clarity (clearness) can be attained as is the case with the conventional methods. This allows an installation space for a solid-liquid separation apparatus to be reduced and moreover, initial capital investment to be substantially reduced, and accordingly, efficient solid-liquid separation processing can be achieved.

Here, the slurry to which the solid-liquid-separation processing method according to the present embodiment can be applied is not particularly limited, but, for example, there may be used a leach slurry obtained by applying leaching processing to a nickel oxide ore in the hydrometallurgical method for nickel oxide ore. The application of this solid-liquid-separation processing method to the leach slurry enables the separation of a leach residue in the leach slurry therefrom with a smaller number of the stages than in the conventional method, whereby a leachate having a high clarity can be obtained. Hereinafter, more specific descriptions will be given by mentioning a specific example in which a leach slurry obtained by applying leaching processing to a nickel oxide ore is employed as a slurry.

### «2. Hydrometallurgical method for nickel oxide ore»

In advance of a specific description about the solid-liquid-separation processing method, first, there will be given a description about a hydrometallurgical method for nickel oxide ore which includes a solid-liquid separation step in which the solid-liquid-separation processing method is used. This hydrometallurgical method for nickel oxide ore is a hydrometallurgical method in which nickel and cobalt are leached and recovered from a nickel oxide ore by using, for example, high pressure acid leach (HPAL).

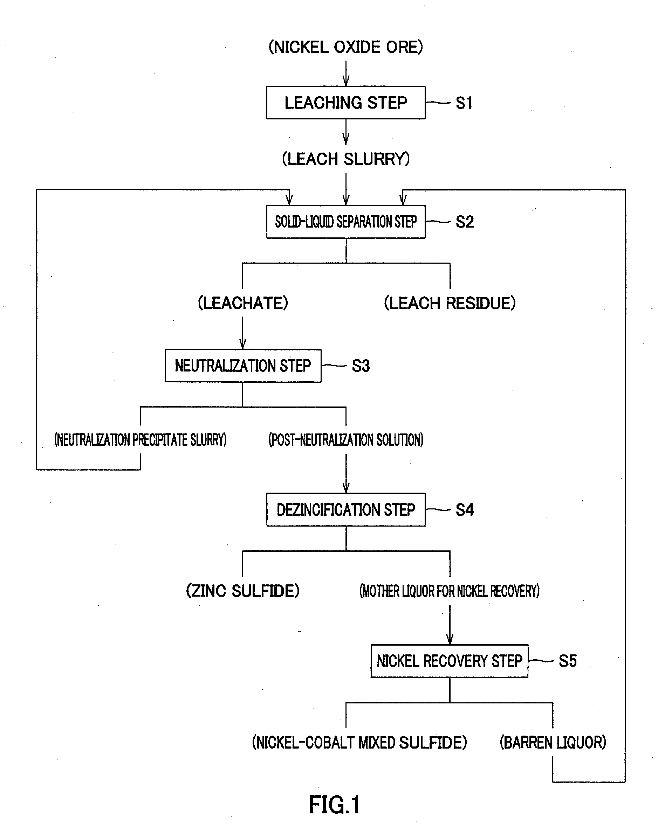

Fig. 1 illustrates an example of a flowchart (a process chart) of the hydrometallurgical method for nickel oxide ore by using high pressure acid leach. As illustrated in Fig.1, the hydrometallurgical method for nickel oxide ore includes: a leaching step S1 in which sulfuric acid is added to a slurry of a nickel oxide ore to apply leaching processing to the slurry under high temperature and pressure; a solid-liquid separation step S2 in which multistage washing is applied to a leach slurry to separate a residue therefrom, whereby a leachate containing an impurity element together with nickel and cobalt is obtained; a neutralization step S3 in which the pH of the leachate is adjusted to separate a neutralization precipitate containing the impurity element therefrom, whereby a post-neutralization solution containing zinc together with nickel and cobalt is obtained; a dezincification step S4 in which a sulfurizing agent such as hydrogen sulfide gas is added to the post-neutralization solution to form a zinc sulfide, and the zinc sulfide is separated and removed therefrom to obtain a mother liquor for nickel recovery which contains nickel and cobalt; and a nickel recovery step S5 in which a sulfurizing agent is added to the mother liquor for nickel recovery to form a mixed sulfide containing nickel and cobalt.

### (1) Leaching step

In the leaching step S1, leaching processing using, for example, high pressure acid leaching is applied to a nickel oxide ore. Specifically, sulfuric acid is added to an ore slurry obtained by crushing a nickel oxide ore serving as a raw material, and, for example, using a high temperature pressurizing tank (autoclave), the ore slurry is pressurized under a high temperature of 220 to 280 ° C to be agitated, whereby a leach slurry including a leachate and a leach residue is formed.

As the nickel oxide ore used in the leaching step S1, laterite ore, such as limonite ore or saprolite ore, is mainly employed. The nickel content of a laterite ore is usually 0.8% to 2.5% by weight, and the nickel is contained in the form of a hydroxide or a magnesium silicate mineral. Furthermore, the iron content of a laterite ore is 10% to 50% by weight, and the iron is contained mainly in the form of trivalent hydroxide (goethite), but, a magnesium silicate mineral contains some divalent iron. Furthermore, besides such laterite ore, an oxide ore containing valuable metals, such as nickel, cobalt, manganese, and copper, for example, a manganese lump present in a deep seabed is used in the leaching step S1.

In the leaching processing in the leaching step S1, a leaching reaction and a high temperature hydrolysis reaction occur, whereby nickel, cobalt, and the like are leached out in the form of sulfate and a leached-out iron sulfate is fixed as hematite. It should be noted that, since the fixation of iron ions does not completely proceed, divalent and trivalent iron ions besides nickel, cobalt, and the like are usually contained in a liquid portion of an obtained leach slurry.

The amount of sulfuric acid added in the leaching step S1 is not particularly limited, and an excessive amount thereof enough to leach out iron contained in an ore is used. For example, 300 to 400 kg of sulfuric acid is added per ton of ore. When the amount of sulfuric acid added per ton of ore exceeds 400 kg, sulfuric acid costs become higher, which is not preferable. It should be noted that, in the leaching step S 1, from a viewpoint of filterability of a hematite-containing leach residue formed in the subsequent solid-liquid separation step S2, the amount of sulfuric acid added is preferably adjusted so that an obtained leachate has a pH of 0.1 to 1.0.

### (2) Solid-liquid separation step

In the solid-liquid separation step S2, multistage washing is applied to the leach slurry formed in the leaching step S1 to obtain a leach residue and a leachate containing zinc as an impurity element besides nickel and cobalt.

In the solid-liquid separation step S2, the leach slurry is mixed with a washing liquid, and then, solid-liquid separation is applied thereto using thickening apparatuses provided in multiple stages as a solid-liquid separation apparatus. Specifically, first, the leach slurry is diluted by a washing liquid, and then, a leach residue in the slurry is thickened as a sediment in the thickening apparatus. Thus, the amount of nickel adhering to the leach residue can be reduced depending on the degree of the dilution. Furthermore, the use of such thickening apparatuses connected in multiple stages enables an improvement in the recovery percentage of nickel and cobalt.

As a multistage washing method in the solid-liquid separation step S2, there is employed a counter current decantation method (CCD method) in which the leach slurry is brought into countercurrent contact with a washing liquid containing no nickel. Thus, a washing liquid to be newly introduced in a system can be cut down, and at the same time, the recovery percentage of nickel and cobalt of not less than 95% can be achieved.

The washing liquid is not particularly limited, and washing liquids which contain no nickel and do not affect the step may be used. Among such washing liquids, a washing liquid having a pH of 1 to 3 is preferably used. This is because, in the case where aluminum is contained in the leachate, a washing liquid having a high pH causes a bulky aluminum hydroxide to be formed, thereby leading to poor sedimentation of the leach residue inside a thickening apparatus. Hence, as the washing liquid, there is preferably repeatedly used a barren liquor having a low pH (a pH of approximately 1 to 3) which is obtained by the nickel recovery step S5 as a downstream step.

Descriptions of the solid-liquid separation processing using the multistage washing method, including a description of the configuration of the thickening apparatus, will be given in detail later.

### (3) Neutralization step

In the neutralization step S3, the pH of the leachate separated in the solid-liquid separation step S2 is adjusted, whereby a neutralization precipitate containing an impurity element is separated therefrom to obtain a post-neutralization solution containing zinc together with nickel and cobalt.

Specifically, in the neutralization step S3, while oxidation of the separated leachate is controlled, a neutralizer such as calcium carbonate is added to the leachate so as to attain a post-neutralization solution having a pH of not more than 4, preferably a pH of 3.0 to 3.5, more preferably a pH of 3.1 to 3.2, whereby the post-neutralization solution which is to serve as a source of a mother liquor for nickel recovery and a neutralization precipitate slurry which contains trivalent iron as an impurity element are formed. In the neutralization step S3, such application of the neutralization processing to the leachate allows the neutralization of an excessive acid which is used in the leaching processing by high pressure acid leach, whereby the post-neutralization solution which is to serve as a source of a mother liquor for nickel recovery is formed, and also, impurities such as trivalent iron ions, aluminum ions, and the like which remain in the solution are removed as neutralization precipitates.

### (4) Dezincification step

In the dezincification step S4, a sulfurizing agent such as hydrogen sulfide gas is added to the post-neutralization solution obtained by the neutralization step S3 to perform sulfurization processing, whereby a zinc sulfide is formed, and the zinc sulfide is separated and removed to obtain a mother liquor for nickel recovery which contains nickel and cobalt (a post-dezincification solution).

Specifically, for example, the post-neutralization solution containing zinc together with nickel and cobalt is introduced into a pressurized container, and hydrogen sulfide gas is blown into a gas phase thereof, whereby zinc is selectively sulfurized in contrast to nickel and cobalt, and thus, a zinc sulfide and a mother liquor for nickel recovery are formed.

### (5) Nickel recovery step

In the nickel recovery step S5, a sulfurizing agent such as hydrogen sulfide gas is blown into the mother liquor for nickel recovery which is obtained by separating and removing zinc as an impurity element in the form of zinc sulfide in the dezincification step S4, whereby a sulfurization reaction is induced to form a sulfide containing nickel and cobalt (a nickel-cobalt mixed sulfide) and a barren liquor.

The mother liquor for nickel recovery is a sulfuric acid solution obtained by reducing an impurity component in the leachate of the nickel oxide ore through the neutralization step S3 and the dezincification step S4, and the mother liquor has, for example, a pH of 3.2 to 4.0, a nickel concentration of 2 to 5 g/L, and a cobalt concentration of 0.1 to 1.0 g/L. It should be noted that there is a possibility for approximately a few g/L of iron, magnesium, manganese, and the like to be contained as impurity components in this mother liquor for nickel recovery, but, these impurity components have lower stability as a sulfide, compared to nickel and cobalt which are to be recovered, and hence, those impurity components are not contained in a formed sulfide.

In the nickel recovery step S5, a nickel-cobalt mixed sulfide containing less impurity component and a barren liquor in which the concentration of nickel is stabilized at a low level are formed and recovered. Specifically, sedimentation and separation processing using a sedimentation apparatus such as a thickening apparatus is applied to a slurry of the nickel-cobalt mixed sulfide obtained by the sulfurization reaction, whereby the nickel-cobalt mixed sulfide as a sediment is separated and recovered from the bottom part of the thickening apparatus. On the other hand, an aqueous solution component is made to overflow, thereby being recovered as a barren liquor. It should be noted that, as mentioned above, this barren liquor contains unsulfurized impurity elements of iron, magnesium, manganese, and the like.

### <<3. Solid-liquid separation step in hydrometallurgical method>>

Next, the foregoing solid-liquid separation step S2 in the hydrometallurgical method for nickel oxide ore will be described in more detail. As mentioned above, in the solid-liquid separation step S2, thickening apparatuses serving as solid-liquid separation apparatuses are connected in multiple stages, and, the leach slurry obtained in the leaching step S1 is made to undergo multistage washing using a counter current decantation method (CCD method) in which the leach slurry is brought into countercurrent contact with a washing liquid containing no nickel, whereby solids (leach residue) contained in the leach slurry are separated therefrom to obtain a crude nickel sulfate solution from which the solids are removed.

### <3-1. Configuration of thickening apparatus and multistage washing>

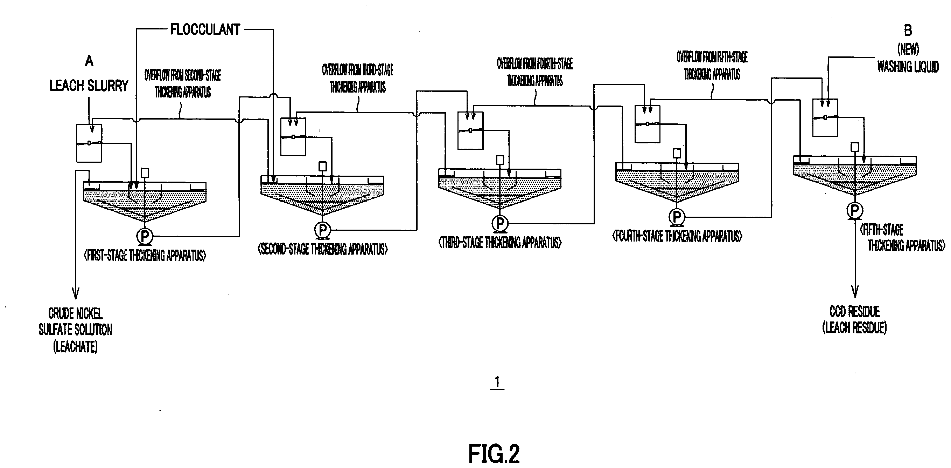

Fig. 2 illustrates a configuration of an example of a processing apparatus to implement a CCD method with thickening apparatuses connected in multiple stages. It should be noted that a processing apparatus 1 illustrated in Fig. 2 has a configuration in which thickening apparatuses are connected in five stages, but, the number of connected stages is not limited to this.

In the CCD method, there is used a processing apparatus in which a thickening apparatus which is regarded as one stage includes an agitation tank and a sedimentation tank configured to perform solid-liquid separation processing, and the thickening apparatuses are serially connected in multiple stages, for example, in five to eight stages. In this processing apparatus 1, the leach slurry obtained in the leaching step S1 is charged into a first-stage thickening apparatus arranged at one end (on a A side in Fig. 2), and a washing liquid such as industrial water is charged into a last-stage (fifth-stage) thickening apparatus at the other end (on a B side in Fig. 2). Then, the leach slurry and the washing liquid come into countercurrent contact with each other inside the processing apparatus 1, and, at the same time, a flocculant is added to the leach slurry charged from the A side, whereby solids in the slurry are flocculated to promote solid-liquid separation.

### (Thickening apparatus and agitation tank for each stage)

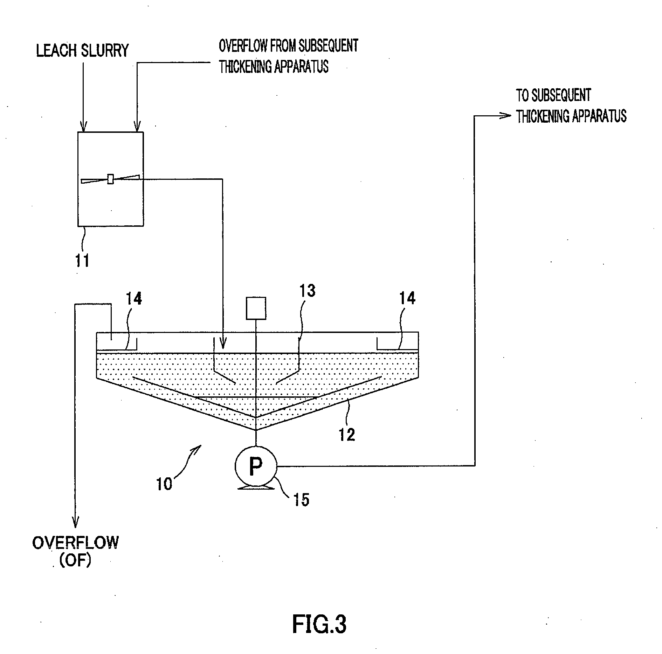

Here, Fig. 3 illustrates a configuration of a thickening apparatus (one stage only) constituting each of the stages of the processing apparatus 1 illustrated in Fig. 2. As mentioned above, the processing apparatus 1 is configured with a plurality of thickening apparatuses which are connected in multiple stages, and a thickening apparatus 10 is configured with an agitation tank 11 and a sedimentation tank 12.

The agitation tank 11 is a tank equipped with agitating members, such as an agitator shaft and an impeller, thereinside. In this agitation tank 11, a leach slurry and overflow liquid transferred from a subsequent-stage thickening apparatus are charged, and agitated and mixed. It should be noted that, in an agitation tank 11 of a last-stage thickening apparatus (a fifth-stage thickening apparatus in the example of Fig. 2), not overflow liquid, but new washing water is charged. In this agitation tank 11, agitation and mixing of the leach slurry and the overflow liquid allow the leach slurry to be washed and free water adhering to solids to be washed away.

The sedimentation tank 12 is, for example, a cylindrical processing tank, and the leach slurry is charged thereinto, whereby the solids in the leach slurry are sedimented and separated out.

The sedimentation tank 12 is equipped with a cylindrical feed well 13 arranged vertically thereinside. In the case where the sedimentation tank 12 has a cylindrical shape, the feed well 13 and the sedimentation tank 12 are approximately concentrically provided. The feed well 13 serves as a channel to supply (feed) a leach slurry supplied from the agitation tank 11 into the sedimentation tank 12.

Furthermore, in a peripheral portion in the upper part of the sedimentation tank 12, there is provided an overflow unit 14 configured such that a leachate which is supernatant liquid obtained by sedimentation of the solids contained in the leach slurry is made to overflow and discharged. This overflow unit 14 has, for example, a gutter-like shape, and is connected with a flow path to transfer overflow liquid from a subsequent-stage thickening apparatus to the agitation tank 11. It should be noted that a solution overflowing from the sedimentation tank 12 (hereinafter, referred to as overflow liquid) is transferred to a preceding-stage agitation tank 11 as mentioned above, on the other hand, a slurry including solids other than the overflow liquid is extracted from the bottom part of the sedimentation tank 12 and transferred to a subsequent-stage agitation tank 11 by a pump 15.

### (Basic flow of multistage washing)

Next, there will be described the basic flow of multistage washing of a leach slurry by the processing apparatus 1 (Fig. 2) configured with a plurality of thickening apparatuses which are connected in multiple stages and each of which includes the agitation tank 11 and the sedimentation tank 12 as illustrated in Fig. 3. It should be noted that arrows in Fig. 2 indicate the flows of the leach slurry and overflow liquid.

First, in the first-stage thickening apparatus, a leach slurry obtained in the leaching step S1 and overflow liquid from a sedimentation tank of the subsequent second-stage thickening apparatus are charged into an agitation tank, and agitated and mixed. In the agitation tank, water adhering to solids in the leach slurry is washed away by the overflow liquid, and then, the washed leach slurry is charged from the agitation tank via a feed well into a sedimentation tank.

At this time, in the first-stage thickening apparatus, together with the leach slurry, a flocculant to flocculate the solids in the slurry is added via the feed well. Then, in the sedimentation tank into which the leach slurry and the flocculant are charged, the leach slurry and the flocculant are mixed, whereby the solids in the slurry are flocculated and sedimented, and separated therefrom. A slurry containing the separated solids is extracted from the bottom part of the sedimentation tank and transported via the pump to an agitation tank of the subsequent second-stage thickening apparatus. On the other hand, supernatant liquid overflowing from the sedimentation tank via an overflow unit thereof is supplied to the neutralization step S3 as a subsequent step in the hydrometallurgical method.

Next, in the second-stage thickening apparatus, the solids extracted from the bottom part of the sedimentation tank of the preceding first-stage thickening apparatus is charged into an agitation tank, and moreover, overflow liquid from a sedimentation tank of the subsequent third-stage thickening apparatus is charged into the agitation tank, whereby free water adhering to the solids is washed away by the overflow liquid. Then, a slurry obtained by the washing in the agitation tank is charged into a sedimentation tank via a feed well thereof, and solids in the slurry are flocculated and sedimented, and separated therefrom. A slurry containing the separated solids is extracted from the bottom part of the sedimentation tank and transported via a pump to an agitation tank of the subsequent third-stage thickening apparatus. On the other hand, overflow liquid overflowing from the sedimentation tank via an overflow unit thereof is charged into the agitation tank of the preceding first-stage thickening apparatus via piping or the like which is connected to the agitation tank of the first-stage thickening apparatus.

After that, also in the third-stage thickening apparatus and the forth-stage thickening apparatus, a slurry containing solids is brought into countercurrent contact with overflow liquid with the same procedure, whereby multistage washing is carried out.

Then, in the fifth-stage thickening apparatus as the last stage, solids extracted from the bottom part of a sedimentation tank of the preceding fourth-stage thickening apparatus are charged into an agitation tank, and moreover, new washing water (for example, a process liquid having a low nickel concentration for a hydrometallurgy process) is charged into the agitation tank, whereby water adhering to the solids is washed away with the washing water. Then, a slurry obtained by the washing in the agitation tank is charged into a sedimentation tank via a feed well thereof, and solids in the slurry are flocculated and sedimented, and separated therefrom. A slurry containing the separated solids is extracted from the bottom part of the sedimentation tank by a pump, and residue processing is applied to the slurry as a leach residue (CCD residue). On the other hand, overflow liquid overflowing from the sedimentation tank via an overflow unit thereof is charged into the agitation tank of the preceding fourth-stage thickening apparatus via piping or the like which is connected to the agitation tank of the fourth-stage thickening apparatus.

It should be noted that solid-liquid separation processing is thus performed with multistage washing of a leach slurry, and therefore, that is good enough for new washing water to be charged into only the last-stage thickening apparatus, and hence, it is not unnecessary for new washing water to be charged into the each stage thickening apparatus other than the last-stage thickening apparatus. This makes it possible to save washing water substantially.

### <3-2. Specific operation of solid-liquid separation processing>

Here, as for overflow liquid from the each stage thickening apparatus, overflow liquid from the last-stage thickening apparatus (the fifth-stage thickening apparatus in Fig. 2) has a lowest content of valuable metals, such as nickel and cobalt. One reason for this is that valuable metals have been already washed in an agitation tank of the last-but-two stage thickening apparatus (the third-stage thickening apparatus in Fig. 2). Furthermore, another reason for this is that new washing water and a slurry which is solid-liquid separated in the last-but-one stage thickening apparatus (the fourth-stage thickening apparatus in Fig. 2) overflow, and furthermore, the slurry is charged into the last-but-one stage thickening apparatus (the fourth-stage thickening apparatus in Fig. 2) and agitated and washed, and a washed slurry is charged into the last-stage thickening apparatus.

On the other hand, overflow liquid from the last-but-one stage thickening apparatus (the fourth-stage thickening apparatus in Fig. 2) has a larger amount of valuable metals contained in free water adhering to solids than that from the last-stage thickening apparatus, and, gradually, as a thickening apparatus is more distant from the last-stage thickening apparatus, overflow liquid from the thickening apparatus has a larger content of valuable metals, and overflow liquid from the first-stage thickening apparatus has a largest content of valuable metals. Commonly, operations are performed so as to recover a crude nickel sulfate solution as overflow liquid which leads to the achievement of a 95% or higher recovery percentage of nickel and cobalt.

Furthermore, overflow liquid from the first-stage thickening apparatus has undergone a solid-liquid separation process in the each stage thickening apparatus, and accordingly, the sedimentation of particles in the overflow liquid has proceeded. Therefore, the overflow liquid from the first-stage thickening apparatus has a lowest turbidity (a highest clarity). Specifically, an operation is performed so as to achieve a turbidity of not more than 200 NTU. Here, as mentioned above, the recovery percentage of nickel and cobalt recovered from the overflowing crude nickel sulfate solution (leachate) has a good correlation to the turbidity of the leachate, and accordingly, when an operation is performed so as to achieve a turbidity of not more than 200 NTU, a nickel and cobalt recovery percentage of not less than 95% is achieved.

However, in practical operations of hydrometallurgy processing for nickel oxide ore, it is desirable that, even when a processing apparatus having a smaller number of connected thickening-apparatus stages is used in the solid-liquid separation step S2, a nickel and cobalt recovery percentage of not less than 95% is achieved.

Therefore, in the solid-liquid-separation processing method according to the present embodiment, in the processing configured to apply multistage washing to a leach slurry by the foregoing thickening apparatuses provided in multiple stages and thereby to separate solids from the slurry, when a flocculant to flocculate the solids in the leach slurry is added, a predetermined amount of the flocculant is distributed among and added to the first-stage thickening apparatus and the second-stage thickening apparatus. Specifically, as illustrated in Fig. 2, a predetermined proportion of the flocculant is added to the feed well of the first-stage thickening apparatus, and the remainder of the flocculant is added to the overflow unit of the second-stage thickening apparatus.

According to such solid-liquid-separation processing method, the flocculation of the solids in the leach slurry more effectively proceeds, and even a smaller number of thickening-apparatus stages allows the turbidity of overflow liquid finally discharged from the first-stage thickening apparatus to be lowered, whereby a crude nickel sulfate solution which leads to a nickel and cobalt recovery percentage of not less than 95% can be attained. Specifically, for example, compared to the conventional art which requires connection of six to seven thickening apparatuses, even connection of five thickening apparatuses allows an effect equivalent to or higher than that in the conventional art to be attained. This allows an installation space for the solid-liquid separation apparatuses to be reduced and initial capital investment to be substantially reduced, and accordingly the solid-liquid separation processing can be efficiently performed.

Furthermore, from another viewpoint, the adoption of this solid-liquid-separation processing method allows the turbidity of overflow liquid to be effectively reduced, and accordingly, the recovery percentage of nickel and cobalt from an obtained crude nickel sulfate solution can be improved.

The mechanism of action of this solid-liquid-separation processing method is considered as follows. That is, even if the amount (total amount) of the flocculant added in this solid-liquid-separation processing method is the same (a fixed amount) as in the case where all of the total amount of the flocculant is added only to the first-stage thickening apparatus, part of the total amount of the flocculant is added to an overflow unit of the second-stage thickening apparatus, and therefore, the flocculant which has been diluted to have a lower concentration is added to the feed well of the first-stage thickening apparatus. Thus, without being added in the form of a mass to the first-stage thickening apparatus, the flocculant is distributed among and added to the first-stage thickening apparatus and the second-stage thickening apparatus, and therefore, the flocculant can be efficiently brought into contact with the solids in the leach slurry. It is considered that, as a result, the solid-liquid separation more effectively proceeds, whereby the turbidity of overflow liquid from the first-stage thickening apparatus can be effectively reduced.

Furthermore, particularly, it is considered that, to the leach slurry obtained by applying leaching to a nickel oxide ore, flocculants of different concentrations are added at different times, whereby a higher effect of the flocculant is achieved.

Here, the total amount of the flocculant added is not particularly limited, and is suitably determined in accordance with the amount of solids and the like which are contained in the leach slurry and subject to be processed.

Furthermore, the proportion of the amount of the flocculant added, that is, the proportion of the amount of the flocculant added to the first-stage thickening apparatus to the amount of the flocculant added to the second-stage thickening apparatus (the first-stage : the second-stage) is not particularly limited, but, is preferably from 95:5 to 50:50, more preferably 90:10. When the proportion of the amount of the flocculant added is not within the foregoing range, a sufficient effect of reducing the turbidity of overflow liquid is not achieved, and accordingly, there is a risk that the recovery percentage of nickel from a finally-obtained crude nickel sulfate solution is less than 95%. In other words, there is a risk that the turbidity of the crude nickel sulfate solution is higher than 200 NTU.

### <<4. Examples >>

Hereinafter, Examples adopting the present invention will be described, but, the present invention is never limited to the following Examples.

### <Examples>

### <Example 1>

In the solid-liquid separation step of the hydrometallurgical method for nickel oxidation ore, solid-liquid separation processing was performed in such a manner that, with thickening apparatuses connected in multiple stages as illustrated in Fig. 2, multistage washing (by the CCD method) was applied to a leach slurry obtained in the leaching step, whereby solids (leach residue) contained in the leach slurry was separated therefrom to obtain a crude nickel sulfate solution (leachate). Hereinafter, conditions for the solid-liquid separation processing will be shown.

### (Processing conditions)

| | |
|---|---|
| Ratio of solids in leach slurry : | 44.8% by weight |
| pH of the leach slurry : | 2.3 |
| Flow rate of the leach slurry : | 249 m³/hour |
| Washing liquid : process water having a low nickel concentration | |
| Flow rate of the washing liquid : | 225 m³/hour |
| Number of stages in the CCD method : | 6 stages |
| Volume of the thickening apparatus : | 1500 m³ (the same in each stage) |

In the foregoing solid-liquid separation processing, a predetermined amount of a flocculant to flocculate solids in the leach slurry was added to thickening apparatuses. In Example 1, in the addition of the flocculant, part of a predetermined amount of the flocculant was added to the feed well of the first-stage thickening apparatus, and moreover, part of the predetermined amount of the flocculant was added to an overflow gutter of the second-stage thickening apparatus. The flocculant was added so that the proportion of the amount of the flocculant added to the first-stage thickening apparatus to the amount of the flocculant added to the second-stage thickening apparatus (hereinafter, referred to as "the proportion of the first stage: the second stage") was 90:10.

### <Example 2>

In Example 2, the solid-liquid separation processing was performed in the same manner as in Example 1, except that the proportion of the first stage: the second stage was set to 50:50.

### <Example 3>

In Example 3, the solid-liquid separation processing was performed in the same manner as in Example 1, except that the proportion of the first stage: the second stage was set to 95:5.

### <Comparative Example 1>

In Comparative Example 1, the solid-liquid separation processing was performed in the same manner as in Example 1, except that the proportion of the first stage: the second stage was set to 97:3.

### <Comparative Example 2>

In Comparative Example 2, the solid-liquid separation processing was performed in the same manner as in Example 1, except that the proportion of the first stage: the second stage was set to 45:65.

The following table 1 collectively shows processing results of the solid-liquid separation processing in Examples and Comparative Examples. In Table 1, "turbidity of crude nickel sulfate solution obtained by CCD process" means a measured value of the turbidity of a crude nickel sulfate solution overflowing from an overflow gutter of the first-stage thickening apparatus at the time when 8 hours have elapsed since the attainment of stable operation. It should be noted that the turbidity was measured using a 2100P-type scattered light turbidity meter manufactured by HACH Company.

**[Table 1]**

| | Proportion of addition amount of flocculant (first stage: second stage) | Turbidity of crude nickel sulfate solution obtained by CCD process (NTU) |
|---|---|---|
| Example 1 | 90:10 | 131 |
| Example 2 | 50:50 | 184 |
| Example 3 | 95:05 | 152 |
| Comparative Example 1 | 97:03 | 236 |
| Comparative Example 2 | 45:65 | 224 |

As shown in Table 1, in Example 1 to Example 3, the turbidities of obtained crude nickel sulfate solutions each were much lower than 200 NTU, and thus, the obtained solutions each had a high clarity. Here, the recovery percentage of nickel and cobalt recovered from a crude nickel sulfate solution (leachate) has a correlation to the turbidity of the leachate, and hence, when the turbidity is not more than 200 NTU, a recovery percentage of not less than 95% can be achieved. Hence, it is thought that, according to the solid-liquid separation processing performed in Example 1 to Example 3, a crude nickel sulfate solution having a recovery percentage of not less than 95% can be achieved even with a smaller number of thickening-apparatus stages.

On the other hand, in Comparative Example 1 and Comparative Example 2, the turbidities of obtained crude nickel sulfate solutions were 236 NTU and 224 NTU, respectively, and thus the clarities of the solutions were low. It may be for this reason that flocculation of solids and washing of free water were not sufficient. It is thought that such solid-liquid separation processing in Comparative Example 1 and Comparative Example 2 requires not less than seven thickening apparatuses to be connected in order to achieve a leachate which leads to a nickel and cobalt recovery percentage of not less than 95%.

### Reference Symbols

1...processing apparatus, 10...thickening apparatus, 11...agitation tank, 12...sedimentation tank, 13...feed well, 14...overflow unit, and 15...pump.

## Claims

1. A solid-liquid-separation processing method for separating a leach residue from a leach slurry to obtain a leachate containing an impurity element together with nickel and cobalt, wherein multistage washing is applied to the leach slurry to obtain a solution from which the solids are removed and separate solids in the slurry, the multistage washing comprising thickening apparatuses (10) provided in multiple stages, each thickening apparatus equipped with an agitation tank (11) and a sedimentation tank (12), wherein each sedimentation tank (12) has an overflow unit (14) in a peripheral portion thereof to discharge supernatant liquid and a cylindrical feed well (13) vertically arranged at a central portion thereof, **characterized in that** at the time of adding a flocculant configured to flocculate the solids in the slurry, a predetermined proportion of the flocculant is added to the feed well (13) in a first-stage thickening apparatus (10), and a remainder of the flocculant is added to the overflow unit (14) in a second-stage thickening apparatus (10).

2. The solid-liquid-separation processing method according to claim 1, wherein a proportion of an amount of the flocculant added to the first-stage thickening apparatus (10) to an amount of the flocculant added to the second-stage thickening apparatus (10) is from 95:5 to 50:50.

3. A hydrometallurgical method for nickel oxide ore in which nickel and cobalt are recovered from a leachate obtained by adding sulfuric acid to a nickel oxide ore and performing leaching under high temperature and high pressure,
wherein the method includes a step of the solid-liquid-separation processing method of claim 1 in which,
at the time of solid-liquid separation processing being such that thickening apparatuses (10) each equipped with an agitation tank (11) and a sedimentation tank (12) having an overflow unit (14) in a peripheral portion thereof to discharge supernatant liquid and a cylindrical feed well (13) vertically arranged at a central portion thereof are provided in multiple stages, and multistage washing is applied to a leach slurry obtained by applying leaching to the nickel oxide ore to separate a leach residue in the leach slurry therefrom,
a predetermined proportion of a flocculant is added to a feed well (13) in a first-stage thickening apparatus (10) and a remainder of the flocculant is added to an overflow unit (14) in a second-stage thickening apparatus (10), and multistage washing is applied to the leach slurry to perform the solid-liquid separation processing.

4. The hydrometallurgical method for nickel oxide ore according claim 3, wherein a proportion of an amount of the flocculant added to the first-stage thickening apparatus (10) to an amount of the flocculant added to the second-stage thickening apparatus (10) is from 95:5 to 50:50.

## Patentansprüche

1. Fest-Flüssig-Trennungs-Verarbeitungsverfahren zum Trennen eines Auslaugungsrückstands von einer Auslaugungsaufschlämmung zum Erhalten eines Auslaugungsprodukts, enthaltend ein Verunreinigungselement zusammen mit Nickel und Kobalt, wobei mehrstufiges Waschen auf die Auslaugungsaufschlämmung angewandt wird, um eine Lösung zu erhalten, aus der die Feststoffe entfernt sind, und Feststoffe in der Aufschlämmung abzutrennen, wobei das mehrstufige Waschen Eindickungsvorrichtungen (10), bereitgestellt in mehreren Stufen, umfasst, wobei jede Eindickungsvorrichtung mit einem Rührtank (11) und einem Sedimentationstank (12) ausgestattet ist, wobei jeder Sedimentationstank (12) eine Überlaufeinheit (14) in einem peripheren Abschnitt davon, um überstehende Flüssigkeit abzuführen, und einen zylindrischen Zuführschacht (13), der in einem zentralen Bereich davon senkrecht angeordnet ist, aufweist, **dadurch gekennzeichnet, dass** zu dem Zeitpunkt des Zugebens eines Flockungsmittels, eingerichtet zum Ausflocken der Feststoffe in der Aufschlämmung, ein vorbestimmter Anteil des Flockungsmittels in den Zuführschacht (13) in einer Eindickungsvorrichtung (10) einer ersten Stufe zugegeben wird und ein Rest des Flockungsmittels in die Überlaufeinheit (14) in einer Eindickungsvorrichtung (10) einer zweiten Stufe zugegeben wird.

2. Fest-Flüssig-Trennungs-Verarbeitungsverfahren nach Anspruch 1, wobei ein Verhältnis einer Menge des Flockungsmittels, zugegeben in die Eindickungsvorrichtung (10) einer ersten Stufe, zu einer Menge des Flockungsmittels, zugegeben in die Eindickungsvorrichtung (10) einer zweiten Stufe, von 95:5 bis 50:50 beträgt.

3. Hydrometallurgisches Verfahren für Nickeloxiderz, worin Nickel und Kobalt aus einem Auslaugungsprodukt, erhalten durch Zugeben von Schwefelsäure zu einem Nickeloxiderz und Durchführen von Auslaugen unter hoher Temperatur und hohem Druck, gewonnen werden,
wobei das Verfahren einen Schritt des Fest-Flüssig-Trennungs-Verarbeitungsverfahrens nach Anspruch 1 einschließt, in dem
zu dem Zeitpunkt des Fest-Flüssig-Trennungs-Verarbeitungsverfahrens, welches derart ist, dass Eindickungsvorrichtungen (10), wovon jede mit einem Rührtank (11) und einem Sedimentationstank (12) mit einer Überlaufeinheit (14) in einem peripheren Bereich davon zum Abführen überstehender Flüssigkeit und einem zylindrischen Zuführschacht (13), senkrecht angeordnet in einem zentralen Bereich davon, ausgestattet ist, in mehreren Stufen bereitgestellt sind und mehrstufiges Waschen auf eine Auslaugungsaufschlämmung, erhalten durch Anwenden von Auslaugen auf das Nickeloxiderz, um einen Auslaugungsrückstand in der Auslaugungsaufschlämmung davon abzutrennen, angewandt wird,
ein vorbestimmter Anteil eines Flockungsmittels in einen Zuführschacht (13) in einer Eindickungsvorrichtung (10) einer ersten Stufe zugegeben wird und ein Rest des Flockungsmittels in eine Überlaufeinheit (14) in einer Eindickungsvorrichtung (10) einer zweiten Stufe zugegeben wird und mehrstufiges Waschen auf die Auslaugungsaufschlämmung angewandt wird, um die Fest-Flüssig-Trennungs-Verarbeitung durchzuführen.

4. Hydrometallurgisches Verfahren für Nickeloxiderz nach Anspruch 3, wobei ein Verhältnis einer Menge des Flockungsmittels, zugegeben in die Eindickungsvorrichtung (10) einer ersten Stufe, zu einer Menge des Flockungsmittels, zugegeben in die Eindickungsvorrichtung (10) einer zweiten Stufe, von 95:5 bis 50:50 beträgt.

## Revendications

1. Procédé de séparation solide-liquide pour la séparation d'un résidu de lixiviation depuis une masse de lixiviation pour obtenir un lixiviat contenant une impureté avec du nickel et du cobalt, où un lavage en plusieurs étapes est effectué sur la masse de lixiviation pour obtenir une solution de laquelle les solides sont éliminés, et séparer les solides de la masse, le lavage en plusieurs étapes comprenant des appareils d'épaississement (10) prévus en différentes étapes, chaque appareil d'épaississement étant équipé d'un réservoir d'agitation (11) et d'un réservoir de sédimentation (12), où chaque réservoir de sédimentation (12) présente une unité de débordement (14) dans sa périphérie pour décharger le liquide surnageant et un puits d'alimentation cylindrique (13) disposé verticalement en sa partie centrale, **caractérisé en ce qu'**au moment de l'addition d'un floculant destiné à floculer les matières solides dans la masse, une partie prédéterminée du floculant étant ajoutée au puits d'alimentation (13) dans un appareil d'épaississement (10) de première étape, et le reste du floculant étant ajouté à l'unité de débordement (14) dans un appareil d'épaississement (10) de deuxième étape.

2. Processus de séparation solide-liquide selon la revendication 1, où le rapport de la quantité de floculant ajoutée à l'appareil d'épaississement (10) de première étape à la quantité de floculant ajoutée à l'appareil d'épaississement (10) de deuxième étape se situe dans l'intervalle allant de 95:5 à 50:50.

3. Procédé hydrométallurgique destiné au minerai d'oxyde de nickel, dans lequel on récupère le nickel et le cobalt d'un lixiviat obtenu par addition d'acide sulfurique à un minerai d'oxyde de nickel et réalisation d'une lixiviation sous haute température et haute pression,
où le procédé comprend une étape de processus de séparation solide-liquide selon la revendication 1, dans lequel
le processus de séparation solide-liquide étant tel que des appareils d'épaississement chacun équipés d'un réservoir d'agitation (11) et d'un réservoir de sédimentation (12) ayant une unité de débordement (14) dans sa périphérie pour décharger le liquide surnageant, et un puits d'alimentation cylindrique (13) disposé verticalement en sa partie centrale, sont prévus en plusieurs étapes, et un lavage en plusieurs étapes est appliqué à une masse de lixiviation obtenue par lixiviation du minerai d'oxyde de nickel, afin de séparer un résidu de lixiviation de la masse de lixiviation,
une partie prédéterminée du floculant est ajoutée au puits d'alimentation (13) dans un appareil d'épaississement (10) de première étape, et le reste du floculant est ajouté à l'unité de débordement (14) dans un appareil d'épaississement (10) de deuxième étape, et le lavage en plusieurs étapes est appliqué à la masse de lixiviation afin d'effectuer le processus de séparation solide-liquide..

4. Procédé hydrométallurgique destiné au minerai d'oxyde de nickel selon la revendication 3, où le rapport de la quantité de floculant ajoutée à l'appareil d'épaississement (10) de première étape à la quantité de floculant ajoutée à l'appareil d'épaississement (10) de deuxième étape se situe dans l'intervalle allant de 95:5 à 50:50.
